# EUROPEAN PATENT APPLICATION

(11) **EP 3 109 807 A1**
(43) Date of publication of application: **28.12.2016**
(21) Application number: 15184146.7
(22) Date of filing: 07.09.2015
(51) Int. Cl.: G06Q 10/06, G06F 21/57

(54) **METHOD FOR ASSESSING SAFETY AND SECURITY RISKS OF AN INDUSTRIAL PROCESS**

(30) Priority: 24.06.2015 EP 15305973
(71) Applicant: Electricité de France, 75008 Paris (FR)
(72) Inventor: KRIAA, Siwar, 92260 FONTENAY AUX ROSES (FR); LAAROUCHI, Youssef, 78180 MONTIGNY LE BRETONNEUX (FR); BOUISSOU, Marc, 92320 CHATILLON (FR)
(74) Representative: Cabinet Plasseraud

(57) **Abstract**

A computer implemented method and device is disclosed for assessing security risks of an industrial architecture. It is designed to provide, in output, data of a ranked list of scores of evaluation of risks related to scenarios of attack within industrial processes of exploitation of the industrial architecture, using a knowledge base.

## Description

The present invention relates to the field of safety and security of industrial processes. In particular, it discloses a method to assess both safety and security risks of an industrial process by using a knowledge base of industrial processes.

The term "industrial process" refers to any process performed in any kind of industry. Producing electrical energy from a nuclear plant, manufacturing tires from a single machine tool, harvesting strawberries or launching a jet from an aircraft carrier are examples of industrial processes.

In the present description, a distinction is made between "safety risks" and "security risks" of industrial processes. A safety risk relates to an accidental risk such as a failure of a device whereas a security risk relates to a malicious attack, such as a cyber-attack.

Industrial infrastructures rely on Industrial Control Systems (ICS). ICS offer the necessary means to control and supervise large and critical infrastructures. Their failure or malfunction can engender adverse consequences on the system and its environment; that is why a careful consideration has been given to their safety for a long time. Historically, ICS were isolated and based on simple components and proprietary standards which were completely mastered.

In order to facilitate supervision and control of the industrial process and to reduce system exploitation cost, modem ICS are increasingly integrating information and communication technologies (ICT). For instance, ICS can rely on computer Information Systems (IS). IS are systems composed of people and computers that processes or interprets information.

Thus, ICS are migrating towards standardized and open protocols and increasingly using Commercial Off The Shelf (COTS) products. This trend induces however more complexity in ICS and exposes them to cyber-attacks that exploit vulnerabilities already existent in the ICT components. Such attacks can reach some critical components within the system and alter its functioning causing potential safety-related harms.

For industrial processes being supervised and controlled by modem ICS, such as SCADA (Supervisory Control And Data Acquisition), safety and security risks converge and can have mutual interactions. A joint risk analysis covering both safety and security aspects has become crucial and conditions an optimal risk management as well as resource optimization.

Several approaches have been proposed to deal with safety risks or with security risks separately but only a few jointly deal with safety and security risks.

Among these few approaches stand generic approaches. These generic approaches rely on requirements, generally specified on standards such as ISO/IEC 15026 or ISO/IEC 27005, that are taken into account when designing and operating industrial processes. Safety and security risks are thus assessed by checking that these requirements are fulfilled. These verifications are processed manually by safety/security engineers and experts, which is time and cost consuming. Moreover, these generic approaches are more efficient for the design phase of the industrial processes but not necessarily for long term operating phase of industrial processes.

Model-based approaches have also been proposed. These model-based approaches rely on a formal or a semi-formal representation of industrial processes. Each approach among the few model-based approaches proposed for assessing both safety and security risks requires a dedicated analyst to manually build a model that matches the industrial process.

In particular, the analyst has to interpret the industrial process, based on his understanding of the system and its related risks, to manually build a model that could be processed by quantification tools. Therefore, a tedious work is required from the analyst which is also time and cost consuming. Moreover, the analyst has to rebuild manually the model each time the industrial process changes.

To address these needs, a first aspect of the invention relates to a computer implemented method for assessing security risks of an industrial architecture, comprising:
a preliminary step of:
   - building a knowledge base describing industrial risks related to respective industrial processes of exploitation of said industrial architecture,
and current steps of:
- receiving in input a description of an industrial process,
- using said database to evaluate a risk related to said industrial process, and
- providing, in output, data of evaluation of said risk,
wherein said knowledge base comprises function data for calculating scores of industrial risks related to both:
- scenarios of attack of said industrial architecture, and
- industrial processes of exploitation of said industrial architecture,
so as to provide, in output, data of a ranked list of scores of evaluation of risks related to scenarios of attack within industrial processes of exploitation of said industrial architecture.

The term "industrial process of exploitation" is not limited to a specific exploitation of a structure but rather refers to any process in any field of application. As mentioned before, producing electrical energy from a nuclear plant, manufacturing tires from a single machine tool, harvesting strawberries or launching a jet from an aircraft carrier are examples of industrial processes of exploitation.

The term "industrial architecture" refers to a virtual meta architecture covering a plurality of possible real industrial processes. Thus, the industrial architecture is defined by the plurality of industrial processes comprised in the knowledge base and covered by said industrial architecture.

For example, the knowledge base can cover the virtual meta industrial architecture of energy production. In this case, the industrial architecture would be defined by all industrial processes of electricity production covered by the knowledge base (e.g. by a nuclear plant, by a solar panel, by a wind turbine, etc.). In an embodiment, the industrial architecture is not limited and covers all existing industrial processes.

As the knowledge base is able to assess industrial risks by receiving a description of an industrial process in input, the method can be easily implemented, even by an operator that ignores the functioning of complex quantification tools. The preamble of claim one refers to a method for assessing security risks. However, "security risks" should be understood, in this preamble of claim one, to mean both safety and/or security risks as defined before, in introduction of the present description.

Moreover, the method enables formal modelling of the industrial process and the related attacks and failure modes thanks to the knowledge base. The model generated is next processed which yields a qualitative and quantitative risk analysis. It facilitates risk analyses for engineers and non-experts as it generates automatically attack and fault/failure scenarios that lead to a given undesirable event. Automating the generation of risk scenarios makes it easy to model different hypotheses on the same system architecture; all that is needed is to add these changes by entering new input (without starting from scratch). Finally, the method proposes a robust approach as the system architecture can be directly and easily modified and new risk-related scenarios can be again generated.

In an embodiment, the method comprises the use of said knowledge base to:
- compute possible random failures due to normal exploitation processes so as to evaluate safety risks, and compute failures due to attacks of said industrial architecture so as to evaluate security risks,
- provide a model for safety and security risks management, and evaluate conflicts between safety management and security management,
- output decision support data based on said conflicts evaluation to help a user for risk-taking to exploit said industrial architecture.

An efficient tool to enhance safety and security measures is thus provided. In particular, the mutual interaction and convergence of safety and security risks are taken into account.

In another embodiment, the attack taken into account by the knowledge base is a cyberattack. Thus, the increasing use of ICT in industrial processes is taken into account to assess this kind of new security issues.

In an embodiment, data in input are used to model information architecture in a corporate network. Alternatively or in combination, said data in input are used to model control architecture of a supervision and control network, and/or a process and field network.

The term "corporate network" refers to any network used by at least one operator of a corporation. In particular, it refers to a network used by operators of an entity responsible of the industrial process. As all kind of networks involved in the industrial process could be modelled, the generated model can thoroughly represent entities involved in the industrial process.

In an embodiment, the description of the industrial process received in input comprises a description of at least one component comprised in the industrial process. Thus, skills of operators in charge of assessing risks of the industrial process can be limited to a thorough knowledge of the industrial process. Indeed, the knowledge base makes it possible to build a model from the sole description of components of the industrial process, therefore limiting analytical and modeling skills of the operator to the minimum.

The term "component" refers to every physical or non-physical entity comprised or connected to the industrial process. An workstation, a server, a processor, a sensor, an actuator, a wireless network, a signaling channel, an Ethernet port, the qualification of a worker, a localization of a device involved in the industrial process or a specific risk relating to a device involved in the industrial process are examples of components comprised in the industrial process. The description of the component typically comprises an identifier of the component and parameters and/or characteristics attached to this component.

In another embodiment, the step of receiving in input the description of the industrial process comprises:
▪ displaying a graphical interface comprising a graphical element corresponding to the component comprised in the industrial process; and
▪ upon detection of a selection of the graphical element, receiving in input the description of the component.

The use of graphical elements to receive input from the operator makes it even simpler to use the knowledge base in order to assess risks.

In an embodiment, the industrial process comprises an information system, and the step of receiving in input the description of the industrial process comprises:
▪ analyzing the information system to detect the component comprised in the industrial process; and
▪ upon detection of the component comprised in the information system, extracting a description of the component from the information system to receive in input said extracted description of the component.

The term "information system" refers to any system composed of people and computers that processes or interprets information relating to the industrial process. A Customer Relationship Management (CRM) system, an Industrial Control Systems (ICS), a database of parameters, an Enterprise Resource Planning (ERP), a search engine, an Ethernet network, a geographical information system in an integrated circuit are examples of information systems.

Thus, the human resources required to assess risks relating to an industrial process are very limited. Indeed, the method makes it possible to retrieve data required by the knowledge base to assess the risks. In this way, the task of human operators is reduced to the checking of the automatically input components and, if necessary, to adding some missing components.

In an embodiment, a description of a plurality of components comprised in the industrial process is received in input, said plurality of components constituting the industrial process. Thus, the task required from the operator is limited to inputting the components.

In another embodiment, the knowledge base comprises a software block running an object-oriented program comprising a plurality of classes, at least one class of said plurality of classes corresponding to a component of the industrial architecture. In this embodiment, the step of using said database to evaluate a risk related to said industrial process further comprises:
▪ instantiating at least one object from said class according to the description of the component received in input;
▪ building a textual model from said at least one object.

As explained above, the industrial architecture is a virtual meta architecture covering several possible industrial processes. The industrial architecture typically comprises a large number of available components that can be used in an industrial process covered by the industrial architecture. In this embodiment, components of the industrial architecture correspond to classes, in the sense of object-oriented programming.

In object-oriented programming, a class is an extensible program-code-template for creating objects, providing initial values for state (member variables) and implementations of behavior (member functions or methods). A class can be compared to a mold which, when filled, gives an object having the shape of the mold and all its characteristics. Therefore, when the operator indicates a description of a component comprised in the industrial process, the knowledge base calls the class corresponding to the component and instantiates an object based on the description of the component.

Properties of object-oriented programming are particularly relevant for this method. In particular, the inheritance makes it possible to dynamically modify the textual model by adding objects in a simplified manner. Indeed, when adding a component, such as a new port in a server, a new object can be easily instantiated by directly calling the appropriate sub-class, inheriting from the parent class that has been used to instantiate the object corresponding to the server. Moreover, the inheritance mechanism makes it possible to easily structure the knowledge and avoid redundancy.

Thus, this embodiment provides a robust approach as the model corresponding to the industrial process can be directly and easily modified and new risk-related scenarios can be again generated in a dynamic way.

In another embodiment, the ranked list of scores of evaluation of risks is provided by applying a quantification tool to the textual model, said quantification tool comprising at least one element among a Monte Carlo simulation tool and a Markov method tool. Thus, efficient tools are used to obtain the ranked list of scores.

A second aspect of the invention relates to a computer program product recorded on a storage medium and executable by a computer in the form of a software including at least one software module setup to implement the method according to the first aspect of the invention.

A third aspect of the invention relates to a computer device comprising a processing circuit including a memory unit storing a computer program for performing the method according to the first aspect of the invention.

A fourth aspect of the invention relates to a device for assessing risks of an industrial architecture, comprising:
- a processor adapted to perform:
   - a preliminary step of building a knowledge base describing industrial risks related to respective industrial processes of exploitation of said industrial architecture;
   - current steps of:
- receiving in input a description of an industrial process,
- using said database to evaluate a risk related to said industrial process, and
- providing, in output, data of evaluation of said risk,
- a memory for storing the knowledge base, said knowledge base comprising function data for calculating scores of industrial risks related to both scenarios of attack of said industrial architecture, and industrial processes of exploitation of said industrial architecture,
so as to provide, in output, data of a ranked list of scores of evaluation of risks related to scenarios of attack within industrial processes of exploitation of said industrial architecture.

The present invention is illustrated by way of example, and not by way of limitation, in the figures of the accompanying drawings, in which like reference numerals refer to similar elements and in which:
- Figure 1 represents a context of use of the present invention, according to an embodiment of the invention;
- Figure 2 represents a flowchart of the steps of a method, according to an embodiment of the invention;
- Figure 3 gives an overview of a software block comprised in the knowledge base, according to an embodiment of the invention;
- Figure 4 represents an illustration of components of an industrial process for which risks are assessed, according to an embodiment of the invention;
- Figure 5 represents a device for implementing the invention, according to an embodiment of the invention.

The invention is described below in its application of risk assessing in the field of energy production. However, the invention is not limited to this application and can easily be applied to other field/industries such as goods manufacturing, logistics, farming, army, etc.

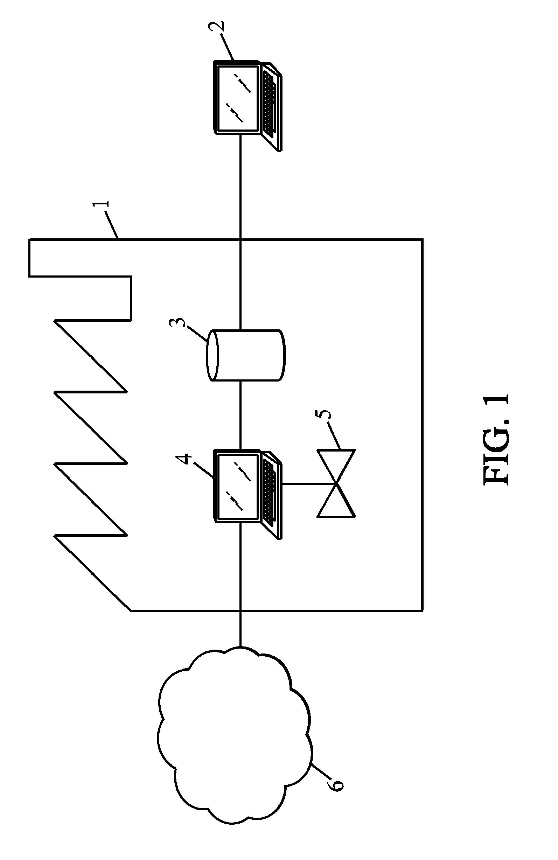

**Figure 1** illustrates, according to an embodiment of the invention, a nuclear plant 1 comprising a server 3, a computer 4 and an actuator 5 connected by an internal network, such as an Industrial Control Systems (ICS). In this embodiment, the plant 1 is used to operate an industrial process and the server 3, the computer 4 and the actuator 5 are components of this industrial process. Components 3, 4 and 5 are also connected to an external network 6, such as the Internet.

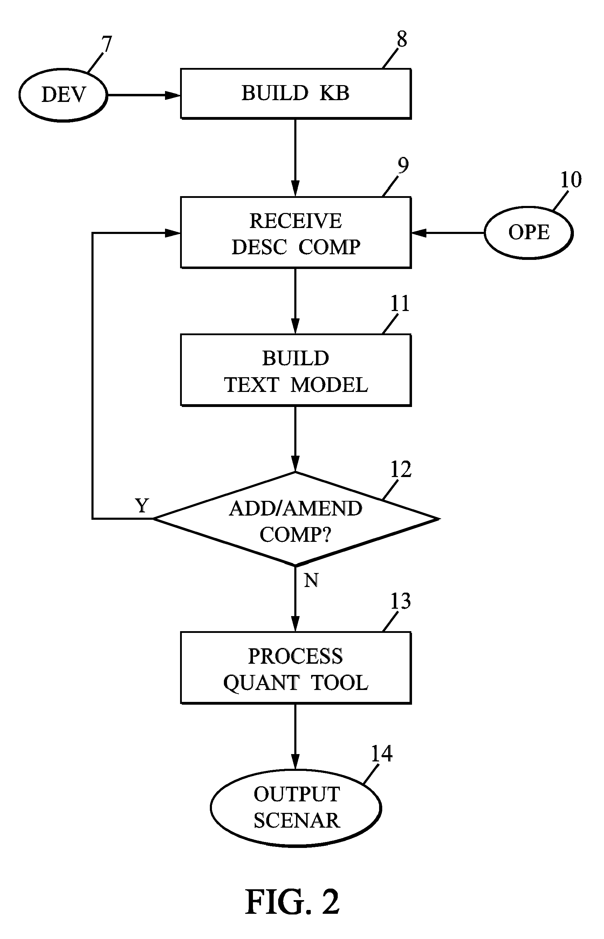

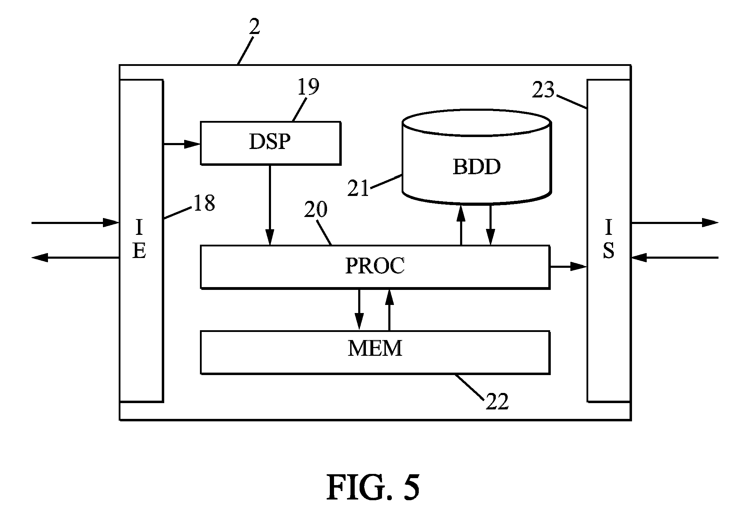

A device 2, described below in reference with figure 5, is used by an operator to assess risks of the industrial process operated by the plant 1, as detailed below in reference with steps 9 to 14 of figure 2, in particular.

**Figure 2** is a flowchart describing steps of the method to assess risks of the industrial process, according to an embodiment of the invention.

A preliminary step 8 of building a knowledge base describing industrial risks related to respective industrial processes of exploitation of an industrial architecture is processed by a developer 7. As mentioned above, the industrial architecture is a virtual meta architecture covering a plurality of possible real industrial processes.

In the present example of the industry of energy production, the industrial architecture comprises all possible industrial processes relating to energy production. Therefore, the knowledge base is adapted to cover electricity production by a nuclear plant, maintenance of a dam, installation of a new power line, etc.

Thus, in this example, the knowledge base is able to deal with all kind of components that can be used or that relate to energy production. As detailed below, a goal of the knowledge base is to build a model understandable by quantification tools from a description of the industrial process. To do that, the knowledge base should be able to identify components and add them to the model.

In an embodiment, the knowledge base comprises a software block running an object-oriented program comprising a plurality of classes, at least one class of said plurality of classes corresponding to a component of the industrial architecture. The software block is typically comprised in a software program able to execute the method according to the invention. The software block can also be the whole software program.

A typical object-oriented language that can be used for the software block is the FIGARO language. FIGARO allows the representation of stochastic models with discrete states and a continuous time scale thanks to two kinds of rules: occurrence and interaction rules (described hereafter). In the knowledge base, FIGARO is used to model the different system components.

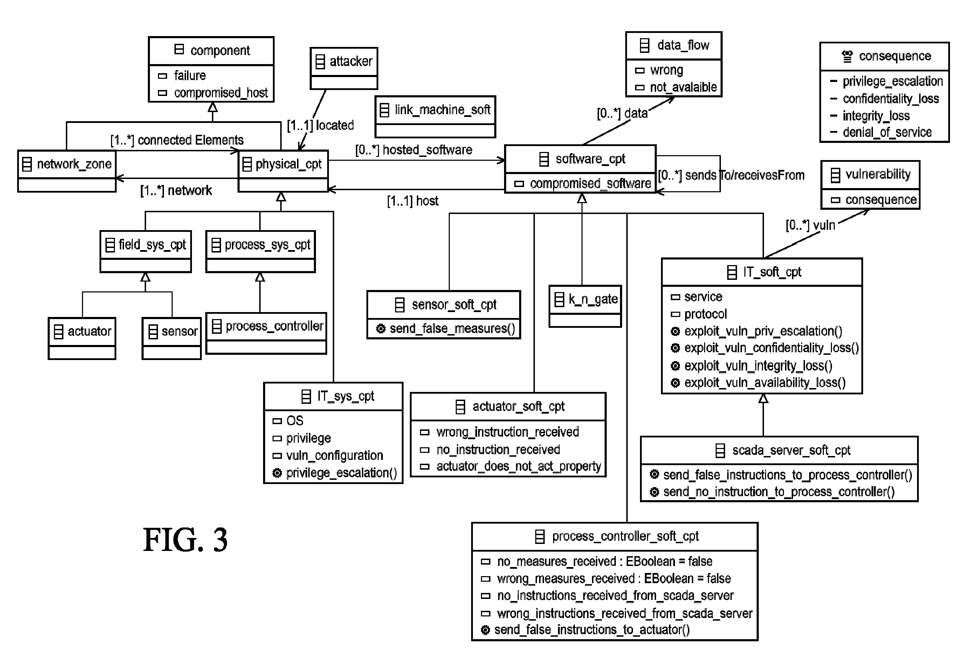

**Figure 3** gives an overview of possible classes comprised in the knowledge base, in an embodiment of the invention. This figure describes components of the industrial architecture, their associated attributes and the possible attacks and failures on each component.

A brief description of the classes involved in figure 3 is given below. Figure 3 gives an example of classes comprised in an industrial architecture that is wider than the industrial architecture in the field of energy production. For this knowledge base, it is hereafter assumed that different machines (physical_cpt) are connected to a network (network_zone) and host different services (software_cpt). Software components exchange different data flow (data_flow) and can host some vulnerabilities (vulnerability) that can be exploited by an attacker (attacker). Precisions concerning other assumptions made for this knowledge base are also given after the following list of classes.
- CLASS component: the super class Component models a component which can fail accidentally or be compromised by an attacker. The component class has two types of risk events: the first is accidental failure which models an accidental failure of a component that can occur randomly. The second is an attack step called access. The Boolean physical_access is initially set to TRUE or FALSE according to whether it is possible or not to physically access the component. If physical_access is set to TRUE, the access attack step can occur with a constant hazard rate lambda and the component is compromised. The Booleans failure and compromised_host model respectively the facts that the component is failed and compromised by an attacker.

The two classes inheriting the characteristics of this class are network_zone and physical_cpt.
- Class network_zone: the network_zone class models a set of machines connected to one another using either wired or wireless communication technologies. The network_zone class overrides the access attack step to condition it on whether the network is wired and can be accessed physically by the attacker or is wireless and there is no authentication mechanism. For wireless networks, the jamming attack can occur randomly. Interaction rules, explained hereafter, propagate the effect not available for data sent by elements connected to the network, in case of the network failure or jamming attacks.
- Class physical_cpt: a distinction is made in this knowledge base between the physical components (physical_cpt) that represent the machines in the network and the software components (software_cpt) running on these machines. This relationship is modeled by the link_machine_soft class. A physical component belongs to a network zone and can host one or many software components.

The interaction rules model the fact that when a physical_cpt is compromised then all the software components running on it are also compromised, and when a software_cpt fails then all data sent from its hosted software components are not available.
- Class software_cpt: this class models a software component running on a given host for instance server and client applications. A software_cpt can send and receive data from other software components. The data interface models output data_flow of the software_cpt.

It is assumed for this knowledge base that software cannot fail. It can however be altered by an attacker (compromised_software).
- Class data_flow: this class models a data flow between two software components. In this knowledge base, data can be either wrong or not available.
- The IT_sys_cpt class models a machine used generally in high levels of the system information architecture and providing advanced functionalities. This machine runs a given Operating System that can be either Windows or Linux in this knowledge base. The attribute privilege models the default privilege that the legitimate user has on this machine. Vuln_configuration models a vulnerability caused by a bad configuration of the machine. An attacker can exploit such vulnerability, if it exists, to gain root privileges on the machine (privilege_escalation_attack).
- The vulnerability class models a vulnerability related to IT ("Information Technology") software; which can have the following consequences: privilege escalation, confidentiality loss, integrity loss or service denial.
- The IT_soft_cpt class models a software component running on an IT_sys_cpt. IT software component can have many or no vulnerabilities. Four generic attack steps are associated to this class that model exploiting vulnerabilities with the four possible consequences of a vulnerability. Interaction rules propagate the effect of data being altered in case of privilege escalation or integrity loss and the effect of data being not available in case of service denial.
- The attacker class models an attacker which is initially located on a physical machine. This latter is consequently a compromised host.

For building this knowledge base, the following assumptions have been made:
- A distinction is made between physical machines and software components running on them. This assumption enables to have a sufficient level of detail in which failures and attacks like physical access are associated with the physical machines and cyber attacks exploiting vulnerabilities are associated to the software component which houses a specific vulnerability;
- A physical machine is said to be compromised if an attacker manages to have root privileges on it. If it is the case, he can compromise all software components running on this machine. This assumption is quite credible as the compromising of one software on a machine does not allow the attacker to compromise all other services unless he succeeds in obtaining root privileges;
- Vulnerability can be associated to a software component or to a physical machine. In the last case, the vulnerability models a bad machine configuration (e.g. system files not write-protected) which is assumed to allow privilege escalation when exploited by an attacker;
- For IT level networks such as a corporate network, a focus is given in the attack propagation (multistage multi-hop) between different IT level machines until reaching some component having a control action on the process. When reaching the control network, a focus is given in data integrity/availability (wrong/not available) as the modification or unavailability is generally the main reason leading to undesirable events.

Thus, the knowledge base can be seen as a Domain Specific Language that enables to describe the typical components of digital industrial infrastructures and the related security attributes (authentication, access control, redundancy). Each component is associated with the attacks and failure modes that can happen on it.

The knowledge base includes two types of rules, rules of occurrence and rules of interaction (also "interaction rules"). The rules of occurrence specify the attacks and malfunctions that may occur on each type of component of the architecture. An example rule for instance associated with a machine comprised in the industrial process is given below:

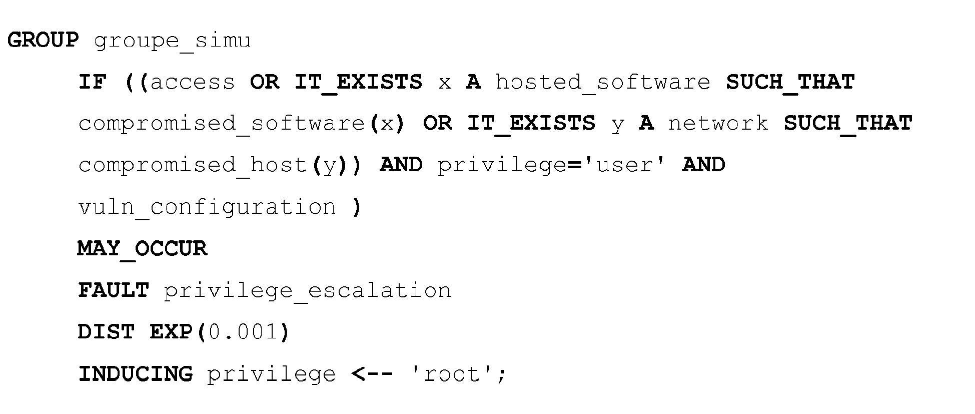

The rules for interactions describe the propagation effects of attack / failure between interconnected components. An example of rules of interaction associated with the network architecture is given below:

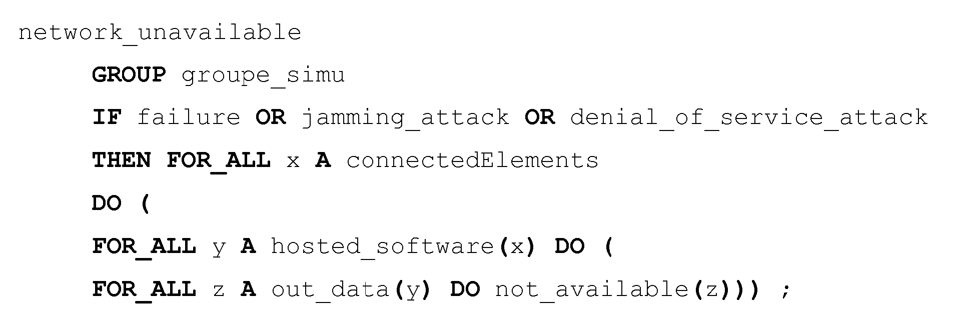

Thus, rules of occurrence describe the occurrence of attacks/failures and preconditions for their achievements. The interaction rules describe how the consequences of these attacks/failures have spread throughout the architecture.

Referring again to **figure 2**, the preliminary step of building the knowledge base is typically done once (with possible regular updates) and the obtained knowledge base is then integrated in a final software. The final software is then distributed to operators for assessing risks of various industrial processes, as long as said industrial processed are covered by the knowledge base.

In step 9, an operator 10 launches said final software on a device 2 to assess risks of the industrial process of producing electricity with the nuclear plant 1. In this step, the operator enters a description of the industrial process. A security engineer, a worker, a technician, an expert, a consultant or an employee of the plant 1 are examples of operator that could use the device 2.

In particular, the operator 10 inputs list of description of components comprised in the industrial process. In this case, this list can comprises a description of components 3, 4 and 5, a description of the internal network linking these components, a list of person able to access the computer 4, etc.

In an embodiment, a graphical interface comprising a graphical element corresponding to the component comprised in the industrial process is displayed and a description of a component is received upon detection of a selection of the graphical element by the operator.

In another embodiment, the device 2 is a computer connected to the internal network that is able to automatically retrieve a description of the industrial process. To do that, the following steps can be applied:
- analyzing an information system of the industrial process, for example supported by the internal network, to detect the component comprised in the industrial process; and
- upon detection of the component comprised in the information system, extracting a description of the component from the information system to receive in input said extracted description of the component.

In an embodiment, the whole device 2 is a remote device, such as a server connected to the network 6. Thus, it is possible to assess risks of the industrial process from a remote distance, which is time and cost efficient.

In step 11, a textual model is built from the knowledge base. To do so, the following sub-steps are applied: (1) instantiating at least one object from a class, comprised in the knowledge base, according to the description of the component received in input and (2) building a textual model from said at least one object. In concrete terms, the textual model is a text and/or a graphical file that can be understood by quantification tools.

The textual model can be dynamically evolving as, as mentioned above, properties of object-oriented programming are particularly relevant for this method. In particular, the inheritance makes it possible to dynamically modify the textual model by adding objects in a simplified manner. Indeed, when adding a component, such as a new port in a server, a new object can be easily instantiated by directly calling the appropriate sub-class, inheriting from the parent class that has been used to instantiate the object corresponding to the server. Moreover, the inheritance mechanism makes it possible to easily structure the knowledge and avoid redundancy.

A step 12 is thus provided to ask the operator, or to automatically send a request to the information system when descriptions of components are automatically retrieved, to know if a modification of the industrial process happens. If yes, the method redirects to step 9 for the operator to amend/add a description of a component.

If no, a ranked list of scores of evaluation of risks is provided in step 13 by applying a quantification tool to the textual model. The quantification tool can be of a Markov Method and/or Monte-Carlo Simulation type. FIGSEQ or YAMS are examples of such quantification tools. YAMS is a Monte Carlo simulator; FIGSEQ is a tool for reliability and availability calculation of systems based on the exploration and quantification of sequences going from the initial state of the system to a failure state. These tools enable to generate automatically attack and fault scenarios based on the occurrence rules described in the knowledge base. The scenarios are sorted by decreasing occurrence probability.

The list of providing, in output, data of evaluation of said risk is then provided in step 14.

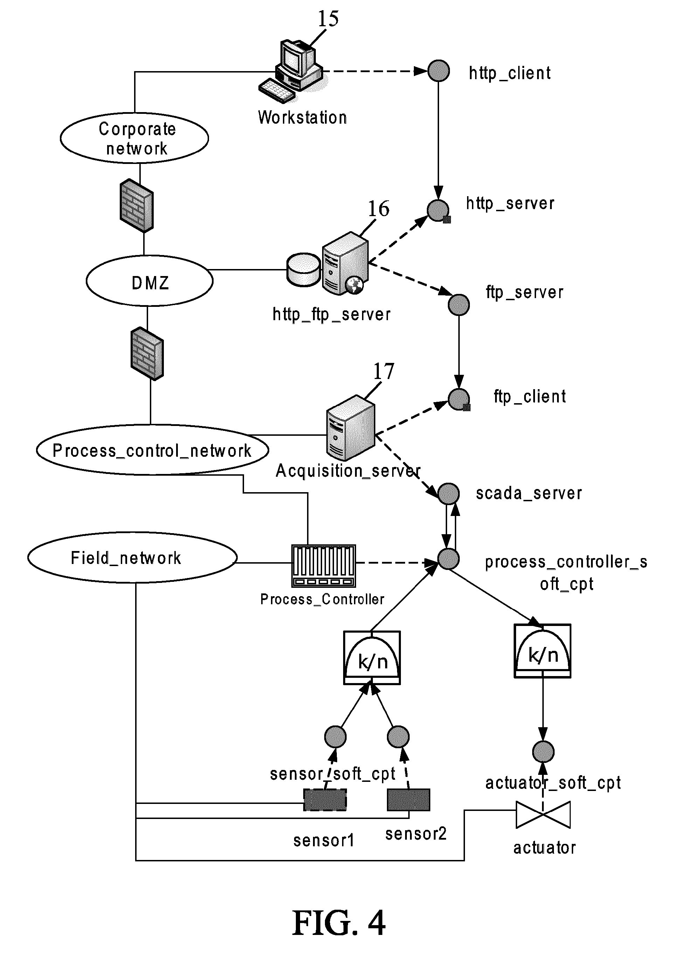

An application on a case study is now given in relation with **figure 4**. The following description of the case is focused on the network components of an industrial process.

A graphical model of the industrial process input using the knowledge base is shown in figure 4. It consists of three network zones: corporate network, process control network and field network. The links of type link_machine_soft are represented by dashed black arrows while full blue arrows model the data flow between software components.

A workstation 15 located at the corporate network uses an HTTP client application for statistical and optimization reasons. This application communicates with an HTTP server running on a machine 16 http_ftp_server placed in a demilitarized zone DMZ and hosting also an ftp server. This latter communicates with the ftp client running on the acquisition server 17. The SCADA (Supervisory Control And Data Acquisition) server software is also hosted on the acquisition server connected to the process control network. It enables supervising and controlling the overall industrial process through collecting data from process controllers and sending back instructions. Process controllers collect data from sensors and send instructions to actuators though voters, represented as k/n gates.

The k/n gate before the actuator is a safety mechanism that represents also a barrier to attackers. In case the actuator receives instructions from different process controllers, the k/n gate can be used as a voter: it executes the instructions only if k instructions out of n are consistent (In Figure 4, k=n=1). The attacker has to compromise or to make unavailable k instructions to make sure his attack will be successful.

The following assumptions for this industrial process:
- Physical access to the operator station is possible;
- The http_ftp_server is running with user privileges;
- A vulnerability exists on the HTTP server and enables privilege escalation;
- The acquisition server is running with user privileges but has a configuration vulnerability that enables to acquire root privileges;
- A vulnerability exists on the ftp client and enables integrity loss;
- The field network uses a wireless communication link to exchange data between the process controller and other field devices.

The knowledge base is used in order to assess the risk related to an undesirable event: "actuator_does_not_act_properly". A pessimistic analysis, in which safety related consequences can happen if the actuator doesn't act properly (i.e. it receives wrong or no instructions), is adopted. For instance, this architecture is used for the control and supervision of a chemical plant and the process controller sends an instruction to stop heating but the heater does not respond which can lead to exceeding temperature limits and resulting in safety related consequences (explosion, human injuries).

The method according to the invention then produces the following results: after one year of functioning without maintenance, the probability of the actuator not acting properly reaches 0,46. Of course, this seems very high, but pessimistic assumption that the undesirable event occurs whenever one actuator in the field network receives wrong or no instruction from the process controller has been made. The malfunction of the heater may be insufficient to create a safety-related risk and must be combined with malfunctions of other components such as hard-shutdown mechanisms.

The attack and failure scenarios that can lead to this undesirable event are automatically generated thanks to the quantification tool. They are based on the occurrence rules in the knowledge base describing attacks (respectively failures) and the rates (inverse of mean time to compromise, respectively mean time to failure) of the exponential distribution associated to each rule. These scenarios are sorted in a table according to their deceasing occurrence probabilities and their contributions to the undesirable event.

The first three scenarios obtained for this use case are given in table 1 below:

**Table 1**

| **Seq**. **N°** | **Transitions** | | **Proba** | **Contrib.** |
|---|---|---|---|---|
| | **Name** | **Rate** | | |
| 1 | access(workstation) | 0.0001 | 1.77^{e}-1 | 3.82^{e}-1 |
| | exploit_server_vuln_priv_escalation (IT_soft_cpt_http_server) | 0.001 | | |
| | exploit_server_vuln_integrity_loss( IT_soft_cpt_client_ftp) | 0.001 | | |
| | privilege_escalation (acquisition_se rver) | 0.001 | | |
| | send_false_instructions_to_process_ controller(scada_server_soft_cpt) | 0.001 | | |
| 2 | access(workstation) | 0.0001 | 1.77^{e}-1 | ^{e}-1 |
| | exploit_server_vuln_priv_escalation (IT_soft_cpt_http_server) | 0.001 | | |
| | exploit_server_vuln_integrity_loss( IT_soft_cpt_client_ftp) | 0.001 | | |
| | privilege_escalation(acquisition_se rver) | 0.001 | | |
| | send_no_instructions_to_process_con troller(scada_server_soft_cpt) | 0.001 | | |
| 3 | jamming_attack(field_network) | 1^{e}-5 | 5.39^{e}-2 | 1.16^{e}-1 |

It can be seen for example that the most likely scenario (Seq. n°1 in Table 1) consists of five attack steps: in the first step the attacker succeeds in having access to the workstation 15 (here because the attribute physical access of this machine was set to true but the attacker can also have remote access). In the second step, the attacker exploits remotely the existing vulnerability in the http server which enables privilege escalation. The HTTP server is consequently compromised and the attacker has root privileges on the http_ftp_server machine which enables him compromise the ftp_server running on it. As the FTP server communicates with an ftp client running on the acquisition server, the attacker tries in the third step to remotely exploit the vulnerability in the ftp client. The ftp client is then compromised. As the vulnerability leads only to integrity loss the attacker will also need to make a privilege escalation attack, in the fourth step, exploiting the configuration vulnerability related to the acquisition server in order to be able to compromise the SCADA server software. If the attacker succeeds in compromising this latter then he can, finally, send false instructions to the process controller which will send itself false instructions to the actuator.

The second attack scenario (Seq. n°2 in Table 1) is the same but instead of falsifying data the attacker will create a denial of service so that no instructions will be sent to the process controller which will itself sends no instructions to the actuator when required.

The third attack scenario (Seq. n°3 in Table 1) is a jamming attack at the wireless field network. This attack is less probable as it requires the attacker to be next to the process controller or next to the actuator to jam the communication which is not easy.

The next three risk scenarios, given in Table 2 (Seq N°4 to 6), are purely accidental. The failure of the acquisition server, the field network or the process controller will cause instructions not to be sent to the actuator when needed.

**Table 2**

| **Seq N°** | **Transitions** | | **Proba** | **Contrib.** |
|---|---|---|---|---|
| | **Name** | **Rate** | | |
| 4 | accidental_failure(acquisition_server) | 1^{e}-6 | 5.39^{e}-3 | 1.16^{e}-2 |
| 5 | accidental_failure(field_network) | 1^{e}-6 | 5.39^{e}-3 | 1.16^{e}-2 |
| 6 | accidental_failure(process_controller_1) | 1^{e}-6 | 5.39^{e}-3 | 1.16^{e}-2 |

**Figure 5** is a possible embodiment for a device 2 that enables the present invention.

In this embodiment, the device 2 comprise a computer, this computer comprising a hard memory 21 to store program instructions loadable into a volatile memory 22 and adapted to cause a circuit 20 to carry out the steps of the present invention when the program instructions are run by the circuit 20. The knowledge base can be stored in memories 21 and/or 22 and/or on a remote server.

The memory 22 and the memory 21 may also store data and useful information for carrying the steps of the present invention as described above.

The circuit 20 may be for instance:
- a processor or a processing unit adapted to interpret instructions in a computer language, the processor or the processing unit may comprise, may be associated with or be attached to a memory comprising the instructions, or
- the association of a processor / processing unit and a memory, the processor or the processing unit adapted to interpret instructions in a computer language, the memory comprising these instructions, or
- an electronic card wherein the steps of the invention are described within silicon.

This computer comprises an input interface 18 for the reception of data used for the above method according to the invention, a digital signal processor 19 for modulating/demodulating said data and an output interface 23 for providing a stacked model.

A person skilled in the art will readily appreciate that various parameters disclosed in the description may be modified and that various embodiments disclosed may be combined without departing from the scope of the invention.

In particular, the example of an object instantiated using a class is given in some embodiments described above. However, the present invention is not limited to objects instantiated using classes but rather covers, in an embodiment wherein an object-oriented language is used, objects instantiated using all kind of entities, such as interfaces, methods, variables, attributes, constructors etc. made available by object-oriented languages. More generally, the knowledge base can be compared to a bunch of molds in which components of the industrial process are field. Objects resulting from the molding are then used by quantification tools.

## Claims

1. A computer implemented method for assessing security risks of an industrial architecture, comprising:
a preliminary step of:
- building a knowledge base describing industrial risks related to respective industrial processes of exploitation of said industrial architecture,
and current steps of:
- receiving (9) in input a description of an industrial process,
- using said database to evaluate (13) a risk related to said industrial process, and
- providing (14), in output, data of evaluation of said risk,
wherein said knowledge base comprises function data for calculating scores of industrial risks related to both:
- scenarios of attack of said industrial architecture, and
- industrial processes of exploitation of said industrial architecture,
so as to provide, in output, data of a ranked list of scores of evaluation of risks related to scenarios of attack within industrial processes of exploitation of said industrial architecture.

2. The method of claim 1, comprising the use of said knowledge base to:
- compute possible random failures due to normal exploitation processes so as to evaluate safety risks, and compute failures due to attacks of said industrial architecture so as to evaluate security risks,
- provide a model for safety and security risks management, and evaluate conflicts between safety management and security management,
- output decision support data based on said conflicts evaluation to help a user for risk-taking to exploit said industrial architecture.

3. The method of anyone of claims 1 and 2, wherein said attack is a cyberattack.

4. The method of anyone of the preceding claims, wherein said data in input are used to model information architecture in a corporate network.

5. The method of anyone of claims 1 to 3, wherein said data in input are used to model control architecture of a supervision and control network, and/or a process and field network.

6. The method of anyone of the preceding claims, wherein the description of the industrial process received in input comprises a description of at least one component (3, 4, 5, 15, 16, 17) comprised in the industrial process.

7. The method of claim 6, wherein the step of receiving in input the description of the industrial process comprises:
▪ displaying (10) a graphical interface comprising a graphical element corresponding to the component comprised in the industrial process; and
▪ upon detection of a selection of the graphical element, receiving in input the description of the component.

8. The method of claim 6, wherein the industrial process comprises an information system, and
wherein the step of receiving in input the description of the industrial process comprises:
▪ analyzing (10) the information system to detect the component comprised in the industrial process; and
▪ upon detection of the component comprised in the information system, extracting a description of the component from the information system to receive in input said extracted description of the component.

9. The method of any of claims 6 to 8, wherein a description of a plurality of components comprised in the industrial process is received in input, said plurality of components constituting the industrial process.

10. The method of any of the preceding claims, wherein the knowledge base comprises a software block running an object-oriented program comprising a plurality of classes, at least one class of said plurality of classes corresponding to a component of the industrial architecture, and
wherein the step of using said database to evaluate a risk related to said industrial process further comprises:
▪ instantiating at least one object from said class according to the description of the component received in input;
▪ building (11) a textual model from said at least one object.

11. The method of claim 10, wherein the ranked list of scores of evaluation of risks is provided by applying a quantification tool to the textual model,
said quantification tool comprising at least one element among a Monte Carlo simulation tool and a Markov method tool.

12. A computer program product recorded on a storage medium and executable by a computer in the form of a software including at least one software module setup to implement the method according to any of claims 1 to 11.

13. A computer device (2) comprising a processing circuit including a memory unit storing a computer program for performing the method according to any of claims 1 to 11.
